(19) **Europäisches Patentamt / European Patent Office / Office européen des brevets**

(11) **EP 1 752 786 B1**

(12) **FASCICULE DE BREVET EUROPEEN**

(45) Date de publication et mention
de la délivrance du brevet:
**20.11.2013 Bulletin 2013/47**

(51) Int Cl.:
*G01S 19/20* *(2010.01)*       *G01S 19/47* *(2010.01)*

(21) Numéro de dépôt: **06118631.8**

(22) Date de dépôt: **09.08.2006**

(54) **Système de navigation hybride inertiel/satellite et procedé de controle d'un tel système**

Hybrides Trägheit-/Satellitennavigationssystem und Verfahren zur Kontrolle eines solchen Systemes

Hybrid inertial/satellite navigation system and method for the operation of such a system

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.08.2005 FR 0508449**

(43) Date de publication de la demande:
**14.02.2007 Bulletin 2007/07**

(73) Titulaire: **Sagem Défense Sécurité**
**75015 Paris (FR)**

(72) Inventeurs:
• **Gavillet, Simon**
  **75015, Paris (FR)**
• **Vacher, Charlie**
  **75015, Paris (FR)**

(74) Mandataire: **Regimbeau**
**20, rue de Chazelles**
**75847 Paris Cedex 17 (FR)**

(56) Documents cités:
**US-A- 5 583 774     US-A- 5 600 329**

• **YOUNG C. LEE, DANIEL G O'LAUGHLIN: "A performance Analysis of a Tightly Coupled GPS/Inertial System for Two Integrity Monitoring Methods" ION GPS/GNSS PROCEEDINGS, 14 septembre 1999 (1999-09-14), pages 1187-1200, XP002382515 US**

• **R. GROVER BROWN, PAUL W. MCBURNEY: "Self-Conatined GPS Integrity Check Using Maximum Solution Separation" NAVIGATION., vol. 35, no. 1, mars 1988 (1988-03), pages 41-53, XP008064596 US**

• **JOHN DIESEL, GREGORY DUNN: "GPS/IRS AIME : Certification for Sole Mans and Solution to RF Interference" ION GPS/GNSS PROCEEDINGS, 17 septembre 1996 (1996-09-17), pages 1599-1606, XP002382516 US**

• **LEE Y C: "Analysis of range and position comparison methods as a means to provide GPS integrity in the user receiver", INSTITUTE OF NAVIGATION, 42ND ANNUAL MEETING, 26 June 1986 (1986-06-26), pages 1-17, XP007902751, US**

• **YOUNES A; BAKHACHE B; NIKIFOROV I; BENHALLAM A: "Sequential RAIM : Theory and application to civil aviation needs", PROCEEDINGS OF THE 11TH INTERNATIONAL TECHNICAL MEETING OF THE SATELLITE DIVISION OF THE INSTITUTE OF NAVIGATION, 18 September 1998 (1998-09-18), - 18 September 1998 (1998-09-18), pages 1993-2002, XP007902753, US**

• **BROWN R GROVER ED - PARKINSON B W ET AL: "Receiver Autonomous Integrity Monitoring", GLOBAL POSITIONING SYSTEM: THEORY AND APPLICATIONS; [PROGRESS IN ASTRONAUTICS AND AERONAUTICS VOL. 163], WASHINTON, DC : AIAA, US, vol. 2, 1996, pages 143-165, XP008090948, ISBN: 978-1-56347-107-0**

• **DIESEL J; LUU S: "GPS/IRS AIME: Calculation of Thresholds and Protection Radius Using Chi-Square Methods", PROCEEDINGS OF THE INSTITUTE OF NAVIGATION (ION) GPS,, 1 September 1995 (1995-09-01), - 1 September 1995 (1995-09-01), pages 1959-1964, XP002434515, US**

**Description**

Le domaine de l'invention est celui des systèmes de navigation qui comprennent une centrale de navigation inertielle hybridée avec un récepteur de positionnement par satellites.

La présente invention concerne plus particulièrement un système de navigation et un procédé de contrôle d'un tel système aptes à détecter les pannes lentes du système de positionnement par satellites.

L'utilisation de centrales de navigation inertielle est aujourd'hui classique dans le domaine de la navigation aérienne et de telles centrales sont généralement installées à bord des aéronefs. Ces centrales utilisent différents capteurs (accéléromètres, gyromètres, etc) fournissant des mesures dont l'intégration permet typiquement de déterminer l'orientation de l'aéronef, sa vitesse dans un repère terrestre, et sa position géographique.

Les capteurs sont cependant imparfaits et présentent des erreurs intrinsèques ou des biais de mesure, susceptibles de varier au cours de la navigation. Ces capteurs sont de plus sujets aux bruits de mesure.

Les biais et bruits de mesure sont d'autant plus gênants que les calculs réalisés à partir de mesures réalisées par les capteurs impliquent des intégrations. L'intégration engendre en effet une dérive de la valeur mesurée, dérive qui croît progressivement au cours du temps dès lors que la valeur intégrée est biaisée au départ.

Les centrales inertielles s'avèrent ainsi précises sur une courte durée mais sont sujettes, du fait de l'intégration temporelle systématique des biais, à une dérive importante. Cette dérive nécessite un recalage périodique réalisé à partir d'autres informations.

Un mode de recalage courant des centrales inertielles consiste à utiliser un récepteur de positionnement par satellites, embarqué dans l'aéronef et fournissant des informations de position et de vitesse à partir des signaux qu'il reçoit des satellites.

On réalise ainsi des systèmes de navigation hybride qui profitent à la fois de la bonne qualité de mesures à court terme des centrales inertielles, et de la bonne précision de positionnement offerte par le système de positionnement par satellites.

L'hybridation des deux sous-ensembles (centrale inertielle et système de positionnement par satellites), est typiquement réalisée par un filtrage numérique, généralement connu sous le nom de filtrage de Kalman, qui détermine une position dite « position hybride » à partir des informations provenant de la centrale inertielle et des informations fournies par un récepteur de positionnement par satellites.

D'une manière générale, on souhaite améliorer constamment la précision et la fiabilité des informations de navigation (position, vitesse, altitude, etc.) fournies par les systèmes de navigation hybride (comprenant une centrale inertielle corrigée de ses erreurs de dérive par un récepteur de positionnement par satellites), mais aussi à connaître la valeur de la précision associée à une mesure.

On cherche en particulier à être capable de fournir avec précision une information de position même si l'un des satellites est défaillant. Un contrôle de l'intégrité du signal satellite est alors généralement mis en oeuvre afin de détecter la défaillance d'un satellite.

La fonction de détection et d'exclusion (FDE) d'un tel contrôle doit être capable d'exclure n'importe quel type de défaillance, et en particulier les défaillances liées à des dérives lentes difficilement identifiables et par conséquent susceptibles d'avoir un effet dramatique sur le recalage de la centrale de navigation inertielle.

Ces dérives lentes se caractérisent typiquement par une rampe comprise entre 0.1 m/s et 5 m/s.

Une dérive d'horloge satellite est un exemple d'une telle panne lente. Il s'agit d'un défaut particulièrement difficile à détecter car les signaux émis par le satellite continuent à présenter toutes les apparences de signaux intègres, et les résultats fournis périodiquement par le récepteur de positionnement par satellites ne présentent donc pas de sauts de position. Il est pourtant nécessaire que l'utilisateur ou le calculateur de bord de l'aéronef soit averti de ce type de défaut.

Différentes méthodes connues sous l'appellation AAIM (acronyme anglo-saxon de « Aircraft Autonomous Integrity Monitoring » pour Contrôle Autonome de l'Intégrité de l'Aéronef) ont été proposées. Deux méthodes principales sont aujourd'hui recommandées par la norme aéronautique civile DO 229 C du groupe de travail RTCA (Radio Technical Commission for Aeronautics) pour réaliser la fonction de détection et d'exclusion de l'AAIM. Il s'agit de la méthode AIME (acronyme anglo-saxon de « Autonomous Integrity Monitored Extrapolation ») développée par la Société Litton System et de la méthode du maximum de séparation (ou SSM selon l'acronyme anglo-saxon de « Solution Separation Method ») développée par la Société Honeywell.

Afin de détecter l'apparition d'une panne lente, ces méthodes proposent de mettre en oeuvre plusieurs filtres de Kalman en parallèle.

L'un de ces filtres est dit filtre principal en ce qu'il utilise les données fournies par la centrale inertielle, ainsi que l'ensemble des N pseudo-distances mesurées par le récepteur GPS pour les N satellites en vue. Ce filtre principal fournit la solution de navigation hybride principale.

N autres filtres de Kalman (filtres secondaires) sont également utilisés. Chaque filtre secondaire utilise les données inertielles ainsi qu'un sous-ensemble de N-1 pseudo-distances mesurées par le récepteur GPS, et fournit une solution de navigation hybride secondaire.

Dans le cadre de la méthode SSM, les N+1 filtres de Kalman fonctionnent en parallèle, de sorte qu'un satellite défaillant peut être détecté en examinant la statistique de l'écart entre la position du filtre principal et chacune des positions établie par les filtres secondaires (c'est-à-dire en comparant les informations de position fournies par les N+1 filtres). Le satellite défaillant est alors isolé, et le filtre principal est remplacé, pour le calcul de la solution de navigation, par le filtre secondaire ne contenant pas le satellite défaillant.

Dans le cadre de la méthode AIME, seul le filtre principal est utilisé pour détecter l'occurrence d'une défaillance. Les N filtres secondaires sont quant à eux utilisés pour isoler le satellite défaillant. Ce satellite défaillant est alors isolé, et, pour le calcul de la solution de navigation, le filtre principal n'est pas remplacé par un filtre secondaire comme c'est le cas de la méthode SSM, mais la navigation est rejouée sur les 30 dernières minutes en excluant le satellite défaillant.

Pour une présentation détaillée des méthodes recommandées dans la norme DO-229C, ainsi que pour une évaluation de leurs avantages et inconvénients, on pourra se rapporter à l'article « A Performance Analysis of a Tightly Coupled GPS/Inertial System for Two Integrity Monitoring Methods » de Dr. Young C. Lee et Daniel G. O'Laughlin, Institute of Navigation, ION GPS-99, September 14-17.

Les différents documents suivants décrivent également des techniques mettant en oeuvre des méthodes de type AIME ou SSM :

- « Self-Contained GPS Integrity Check Using Maximum Solution Separation » de R. Grover Brown et Paul W. McBurney, Navigation, March 1988;
- « GPS/IRS AIME : Certification for Sole Mans and Solution to RF Interference » de John Diesel et Gregory Dunn, Institute of Navigation, ION GPS-96, September 17;
- US 5 583 774; et
- US 5 600 329.

La méthode AIME est une amélioration de la technique RAIM (« Receiver Autonomous *Integrity* Monitoring ») dont une variante dite « Sequential RAIM » est connue du document « Sequential RAIM : Theory and application to Civil Aviation Needs », Proceedings of the 11th International Technical Meeting of the Satellite Division of The Institute of Navigation (ION GPS 1998), XP007902753 US.

On connaît par ailleurs du document « Analysis Of Range And Position Comparison Methods As A Means To Provide GPS Integrity In The User Receiver", Institute of Navigation Annual Meeting, 42nd meeting, XP007902751 US, une solution d'analyse instantanée dite RCM ("Range Comparison Method" conforme aux préambules des revendications indépendantes 1 et 7.

L'un des inconvénients de ces méthodes est la nécessitée de réaliser un système de navigation hybride redondant, comportant N+1 filtres de Kalman fonctionnant en parallèle et déterminant chacun une solution de navigation. Il s'en déduit un système complexe et lourd en terme de calculs.

L'invention a pour objectif de proposer une technique pour le contrôle autonome de l'intégrité au niveau du récepteur GPS qui ne présente pas les désavantages susmentionnés des méthodes de l'état de la technique et soit notamment plus simple à mettre en oeuvre.

A cet effet l'invention propose un système de navigation selon la revendication 1.

D'autres aspects préférés mais non limitatifs de ce système sont définis dans les revendications dépendantes 2-5.

Selon un autre aspect l'invention propose un procédé de contrôle d'un système de navigation selon la revendication 6.

D'autres aspects préférés mais non limitatifs de ce procédé sont définis dans les revendications dépendantes 7-9.

D'autres aspects, buts et avantages de la présente invention apparaîtront mieux à la lecture de la description détaillée suivante de formes de réalisation préférées de celle-ci, données à titre d'exemples non limitatifs et faite en référence aux dessins annexés sur lesquels :

- la figure 1 représente de manière schématique un système de navigation hybride comprenant une centrale inertielle corrigée à l'aide d'un récepteur de positionnement par satellites, selon un mode de réalisation possible du premier aspect de l'invention ;
- la figure 2 illustre le principe de fonctionnement de la détection de la défaillance de l'un des satellites ;
- la figure 3 illustre la détection de défaillance sur différents horizons temporels.

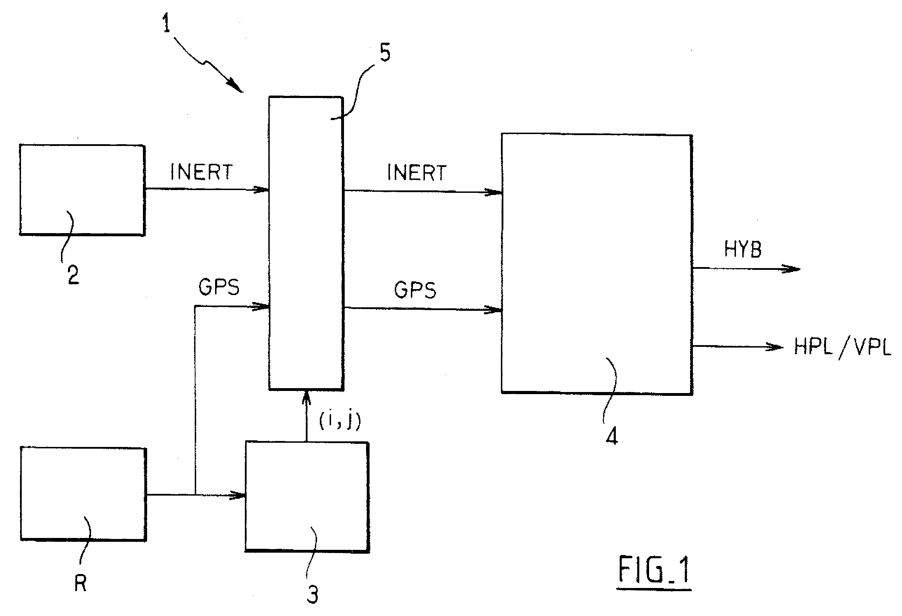

On a représenté de manière schématique sur la figure 1 un système de navigation 1 selon un mode de réalisation possible de l'invention.

Le système 1 est un système de navigation hybride qui comporte :

- une centrale inertielle 2,
- un récepteur R apte à recevoir des signaux en provenance d'une pluralité de transmetteurs $T_1$-$T_N$ (non représentés) et à mesurer, pour chaque transmetteur $T_i$, une pseudo-distance $Pd_i$ entre le récepteur R et ledit transmetteur $T_i$; et
- un calculateur d'hybridation 4.

La centrale inertielle 2 est le plus souvent composée de capteurs de type accéléromètres, gyromètres, ainsi que d'un calculateur permettant de générer des données appelées par la suite données inertielles, et portant la référence INERT sur la figure 1.

Ces données inertielles sont fournies par la centrale inertielle 2 au calculateur d'hybridation 4.

Les transmetteurs sont typiquement des satellites, et le récepteur est alors un récepteur de positionnement par satellites, typiquement un récepteur GPS (selon l'acronyme anglo-saxon de « Global Positionning System »). On prendra ainsi dans la suite de la description l'exemple d'une constellation de N satellites en vue d'un récepteur GPS.

L'invention n'est toutefois pas limitée au système GPS, mais a vocation à s'étendre à tout type de système de positionnement par satellites du type GNSS (Global Navigation Satellite System), en particulier au futur système Galileo.

Le récepteur GPS R fournit classiquement au calculateur 4 une position géographique (en longitude, latitude et altitude) ainsi que des vitesses de déplacement par rapport à la terre. Sur la figure 1, on regroupe sous la référence GPS l'ensemble des données fournies par le récepteur GPS R.

Le récepteur R utilise pour son fonctionnement une mesure de distances entre le récepteur et chaque satellite en vue du récepteur. Ces distances sont en réalité des pseudo-distances $Pd_i$ (i désignant un satellite) obtenues sous forme de durée de propagation de signal entre chacun des satellites i et le récepteur R le long de l'axe joignant le satellite et le récepteur. La combinaison des pseudo- distances sur plusieurs axes satellites avec la connaissance des positions des satellites à un moment donné (envoyés sous la forme d'éphémérides par les satellites eux-mêmes) permet de calculer la position GPS.

Les données inertielles INERT et les données GPS sont traitées dans le calculateur d'hybridation 4 pour fournir des données inertielles hybrides HYB (latitude hybride, vitesse hybride, position hybride, etc.). Le calculateur d'hybridation fournit aussi une ou plusieurs valeurs de rayon de protection HPL/VPL (c'est-à-dire respectivement un niveau de protection horizontal et un niveau de protection vertical) représentant la précision des données HYB issues de l'hybridation (il s'agit typiquement du rayon à l'intérieur duquel l'intégrité de la position est garantie avec une probabilité d'erreur bornée).

L'hybridation est typiquement réalisée par des algorithmes de filtrage de Kalman permettant de prendre en compte les erreurs intrinsèques de la centrale inertielle et de corriger ces erreurs à l'aide des données satellites.

Dans le cadre de la présente invention, et afin de réaliser la fonction de détection et d'exclusion, les hypothèses suivantes sont faites :

- la probabilité d'avoir deux pannes indépendantes successivement dans la même heure est négligeable, et un tel cas n'est donc pas traité,
- on considère par ailleurs qu'une panne n'est pas intermittente.

Revenant à la description de la figure 1, on a représenté sous la référence 3 des moyens permettant de détecter une panne lente de l'un des satellites $T_1$-$T_N$ en vue du récepteur 3. On notera dès à présent que ces moyens peuvent utiliser uniquement les données GPS, et que la détection de panne peut ainsi être est réalisée dans le cadre de la présente invention (sans que cela ne soit toutefois limitatif) sans utilisation d'autres données, et notamment sans utilisation des données inertielles INERT.

Plus précisément, et selon un mode de réalisation qui sera décrit plus en avant par la suite, ces moyens 3 permettent de détecter que le i-ème satellite présente une panne lente de type j.

La référence 5 sur la figure 1 illustre des moyens aptes à mémoriser l'ensemble des données INERT, GPS fournies respectivement par la centrale inertielle 2 et par le récepteur R. Comme cela sera également décrit plus en avant par la suite, ces moyens de mémorisation 5 permettent, suite à la détection de la défaillance du i-ème satellite, de recalculer à nouveau la solution de navigation HYBRID, ainsi qu'un rayon de protection, en excluant les données correspondant au i-ème satellite, et ce depuis un instant considéré comme correspondant au début de la panne de ce satellite.

Ces moyens de mémorisation sont ainsi un exemple de moyens prévus par la présente invention permettant de réaliser une reconfiguration du système suite à la détection d'une panne, pour retrouver une solution de navigation hybride non polluée par la panne.

On décrit plus précisément ci-après le fonctionnement des moyens 3 pour la détection d'une panne lente d'un satellite.

Le système de navigation 1 comporte à cet effet des moyens pour calculer, pour chaque satellite $T_i$, l'écart entre la pseudo-distance mesurée $Pd_i$ et une pseudo-distance estimée $\hat{P}d_i$ indépendante de la pseudo-distance mesurée Pdi.

La pseudo-distance estimée $Pd_i$ peut en particulier être calculée en utilisant l'ensemble des pseudo-distances mesurées, à l'exception de celle mesurée pour ledit satellite Ti.

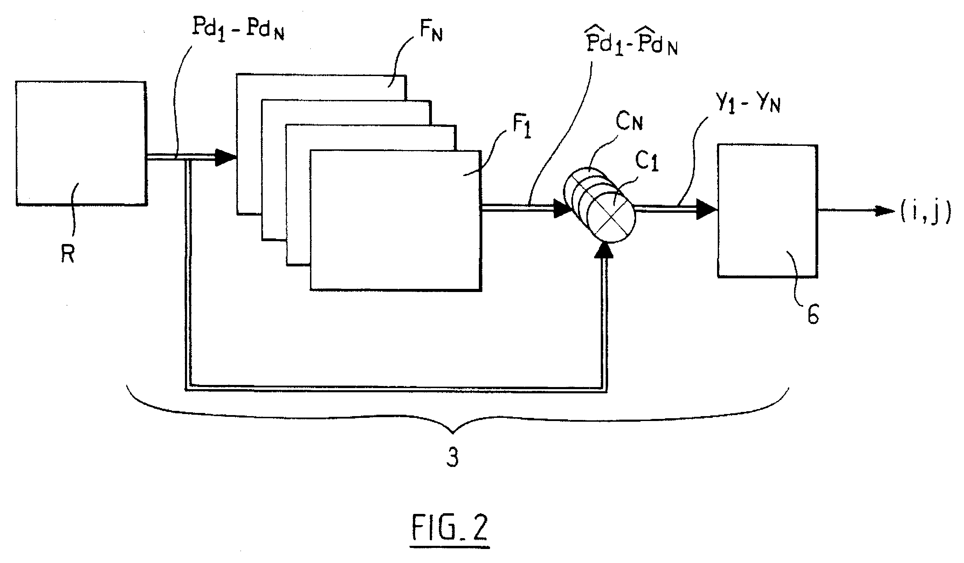

A cet effet, et comme cela est représenté de manière schématique sur la figure 2, le système comporte des moyens $F_1$-$F_N$ pour déterminer, pour chaque satellite $T_i$, une estimation $Pd_i$ de la pseudo-distance entre le récepteur R et ledit satellite $T_i$ en utilisant l'ensemble des pseudo-distances mesurées $Pd_j$ ($j \neq$ i) à l'exception de celle mesurée pour ledit satellite $T_i$.

Un mode de réalisation possible de cette estimation est le suivant.

On réalise un filtre $F_i$ qui utilise en entrée l'ensemble des pseudo-distances $Pd_j$, avec j différent de i, ainsi que des données d'éphéméride correspondant au i-ème satellite. Le filtre $F_i$ permet de déterminer une estimation $\hat{P}d_i$ de la pseudo-distance entre le récepteur et le i-ème satellite. On élabore N filtres $F_1$-$F_N$ de ce type, un par satellite $T_1$-$T_N$.

Un filtre Fi évalue tout d'abord la position du récepteur R sur la base de N-1 pseudo-distances mesurées par le récepteur (celles correspondant aux satellites autre que le i-ème).

L'utilisation de données d'éphéméride concernant le i-ème satellite permet ensuite au filtre $F_i$ d'estimer la pseudo-distance $\hat{P}d_i$ entre le récepteur et le i-ème satellite à partir de la position évaluée du satellite (et cela indépendamment de la pseudo-distance mesurée $Pd_i$ entre le récepteur et le i-ème satellite).

La pseudo-distance estimée pour le i-ème satellite est par conséquent strictement indépendante des données provenant de ce satellite, et n'est en particulier aucunement polluée par une défaillance éventuelle du satellite Ti.

A l'aide de soustracteurs $C_1$-$C_N$, on calcule alors, pour chacun des satellites $T_1$-$T_N$, l'écart $Y_i$ entre la pseudo-distance mesurée $Pd_i$ et la pseudo distance estimée $\hat{P}d_i$ selon $Y_i = Pd_i - \hat{P}d_i$.

Les deux pseudo-distances (celle mesurée $Pd_i$ et celle estimée $\hat{P}d_i$) étant strictement indépendantes, l'écart $Y_i$ est, en l'absence de panne du satellite $T_i$, une variable gaussienne à moyenne nulle et d'écart-type $\sigma_i$.

Le système comporte en outre des moyens 6 pour détecter à partir desdits écarts $Y_1$-$Y_N$ l'éventuelle défaillance de l'un des satellites $T_1$-$T_N$.

Plus précisément l'invention propose d'observer la variation statistique desdits écarts $Y_1$-$Y_N$ sur un horizon temporel lié à la dynamique des pannes.

L'invention prévoit en particulier de détecter différents types de panne, chaque panne présentant une dynamique particulière, et ainsi d'observer la variation statistiques des écarts $Y_1$-$Y_N$ sur une pluralité d'horizons temporels $H_1$-$H_m$, chaque horizon étant lié à la dynamique d'une panne particulière. Une panne très lente sera observée sur un horizon plus important que l'horizon permettant d'observer une panne plus rapide, et il s'avère donc judicieux de disposer de plusieurs horizons temporels afin de pouvoir détecter une panne le plus rapidement possible.

On considère les hypothèses de panne suivantes :

- $h_{i,0}$ : le satellite i n'est pas en panne ;
- $h_{i,1}$: le satellite i est en panne, et la panne peut être détectée en premier sur l'horizon $H_1$;
- $h_{i,j}$ : le satellite i est en panne, et la panne peut être détectée en premier sur l'horizon $H_j$;
- ..
- $h_{i,m}$ : le satellite i est en panne, et la panne est peut être détectée en premier sur l'horizon $H_m$.

Les pannes étudiées dans le cadre de l'invention sont des pannes qui conduisent à une erreur de pseudo-distance linéaire en fonction du temps (rampe).

On note ici que différents types de pannes, leur dynamique ainsi que leurs exigences en termes de probabilités maximales de fausse alarme ou de non détection, sont décrits dans l'appendice R de la norme DO-229C.

Afin de tester ces hypothèses de pannes, on observe la variation statistique des écarts $Y_1$-$Y_N$ sur m horizons temporels différents $H_1$-$H_m$ de manière à pouvoir réaliser des estimations optimales de la variance de l'erreur sur chaque satellite.

Pour chaque type de panne, on détermine un couple ($K_j$ ; $\Delta t_j$) où :

- $\Delta t_j$ représente l'écart temporel minimal entre les écarts $Y_i(t)$ et $Y_i(t+\Delta t_j)$ pour que ceux-ci soient « suffisamment » non corrélés au regard de la dynamique de la panne à détecter. $\Delta t_j$ est supérieur ou égal à $1/F_1$, où $F_1$ représente la fréquence à laquelle le récepteur GPS délivre les pseudo-distances mesurées pour chaque satellite visible ;
- $K_j$ représente le nombre d'écarts successifs et non corrélés nécessaires pour détecter une panne sur l'horizon $H_j$.

On en déduit donc l'horizon temporel $H_j$ associé à une panne de type j, c'est-à-dire le temps maximal $K_j *\Delta t_j$ nécessaire pour détecter une telle panne de type j.

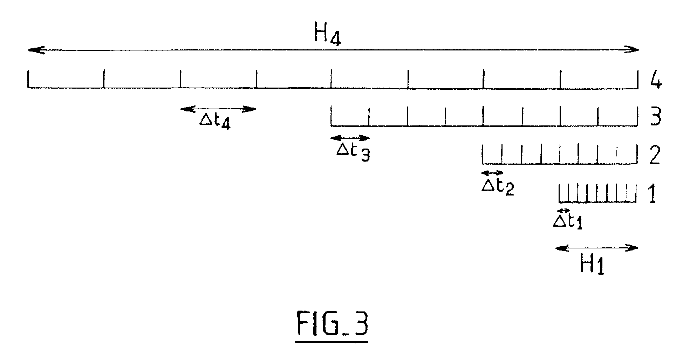

La figure 3 illustre cette détection de différents types de pannes, c'est-à-dire de pannes de dynamiques différentes.

La figure 3 représente plus précisément le couple ($K_j$; $\Delta t_j$) associé respectivement à une panne de type 1, 2, 3 ou 4.

Dans le cadre de cette figure 3, on notera que le nombre $K_j$ d'écarts à prendre en compte est identique pour chacune des pannes.

La panne de type 1 est la panne la plus rapide, et la panne de type 4 est la plus lente. L'horizon $H_4$ de la panne de type 4 est ainsi le plus grand.

Revenant à la description de l'observation de la variation statistique des écarts $Y_1$-$Y_N$, le système 1 comporte des moyens pour comparer, pour chaque satellite $T_i$:

- la pente $p_{i,j}$ estimée sur ledit satellite $T_i$ en faisant l'hypothèse de panne $h_{i,j}$ ;
- et l'écart-type $\sigma_{i,j}$ de l'écart $Y_i$ calculé pour ledit satellite $T_i$ autour de la pente $p_{i,j}$.

Les résultats de ces différentes comparaisons peuvent par exemple être obtenus en utilisant des méthodes d'estimation du type des « moindres carrés ».

On peut alors écrire ces résultats sous la forme d'une matrice E :

$$E(i,j) = \left[ \frac{p_{i,j}}{\sigma_{i,j}} \right]_{(1..N;1..m)}$$

, où i est compris entre 1 et N (nombre de satellites) et j entre 1 et m (nombre de pannes).

On considère un ensemble de m seuils de détection $S_j$, chaque seuil étant associé à un type de panne. Les seuils $S_j$ sont déterminés en tenant compte des exigences de $Pfa_j$ (probabilité de fausse alarme).

Le test de détection d'une panne de type j consiste alors à comparer l'ensemble des termes de la matrice E aux seuils $S_j$, et cela toutes les $\Delta t_j$ secondes.

En l'absence d'une panne de type j de l'un des

satellites $T_1$-$T_N$, les valeurs des termes de la matrice E sont bornées : $\forall i, E(i,j) \in [0; S_j]$

En revanche, lorsque $\exists(i,j)/E(i,j)>S_j$, on a détecté la défaillance de l'un des satellites.

Il est par ailleurs possible de conclure quant au fait que le satellite défaillant est le satellite $T_i$, voire même de conclure que ce satellite défaillant $T_i$ présente une panne de type j.

Revenant à la description de la figure 1, les moyens 3 de détection de panne indiquent aux moyens de mémorisation 5 l'occurrence d'une panne de l'un des satellites.

Selon un mode de réalisation particulier de l'invention, ces moyens 3 peuvent par ailleurs indiquer aux moyens de mémorisation 5 l'occurrence d'une panne de type j du satellite $T_i$.

La position hybride HYB est alors déterminée en utilisant les données INERT de la centrale inertielle et l'ensemble des pseudo-distances mesurées par le récepteur R à l'exception de celle correspondant au satellite détecté comme défaillant. En d'autres termes, on exclut les données issues du satellite défaillant du calcul de la solution de navigation.

D'une manière générale, l'invention prévoit, une fois une panne détectée, de mettre en oeuvre une reconfiguration du calcul de la solution de navigation, pour retrouver une solution de navigation hybride non polluée par la panne.

Une telle solution non polluée par la panne est typiquement une solution sous-optimale dans le sens où elle n'utilise pas toutes les mesures disponibles (au contraire de la solution principale désormais polluée), mais cette solution sous-optimale présente l'avantage d'être intègre.

Une telle solution sous-optimale intègre est par exemple la solution de navigation obtenue en utilisant uniquement les données INERT (solution de navigation inertielle pure), ou encore la solution de navigation obtenue en utilisant les données INERT associées à une ou plusieurs mesures provenant d'un ou plusieurs capteurs non défaillants.

Un autre exemple non limitatif de reconfiguration est celui explicité ci-après de la mise en oeuvre d'un rejeu au cours duquel la position hybride HYB est déterminée en utilisant les données du passé mémorisées (données INERT issues de la centrale inertielle 2, et données GPS issues du récepteur R), et en supprimant les mesures issues du satellite défaillant $T_i$ depuis un instant correspondant au minimum au début de la panne dudit satellite.

Soit T l'instant auquel on détecte une panne de type j du satellite $T_i$. On peut alors considérer que le satellite $T_i$ est en panne depuis l'instant T-$H_j$, où Hj représente l'horizon temporel de la panne de type j (c'est-à-dire la durée maximale nécessaire pour détecter la panne de type j).

Une telle reconfiguration par mise en oeuvre d'un rejeu est avantageuse dans la mesure où l'apport du satellite $T_i$ est conservé jusqu'à l'instant t= T-$H_j$ de début de panne dans le calcul de la solution de navigation, puis exclu dudit calcul de la solution de navigation.

D'une manière plus générale, on peut utiliser un majorant de tous les horizons afin de s'assurer que la panne n'était pas présente à l'instant à partir duquel le rejeu commence. Cette méthode permet d'être robuste à une erreur d'identification de la panne.

Bien entendu, les moyens de mémorisation 5 sont alors adaptés pour enregistrer les données INERT et GPS sur une durée correspondant (au minimum) à l'horizon temporel de la panne la plus lente (c'est-à-dire à l'horizon $H_4$ dans le cadre de la figure 3), ou au majorant mentionné ci-dessus de l'ensemble des horizons temporels.

## Revendications

1. Système de navigation comprenant :

   • un récepteur (R) apte à recevoir des signaux en provenance d'une pluralité de transmetteurs ($T_1$-$T_N$) et à mesurer, pour chaque transmetteur ($T_1$), une pseudo-distance ($Pd_i$) entre le récepteur (R) et ledit transmetteur ($T_i$),
   • des moyens pour évaluer la position du récepteur en utilisant l'ensemble des pseudo-distances mesurées ($Pd_m$) à l'exception de celle ($Pd_i$) mesurée pour ledit transmetteur ($T_i$) ;
   • des moyens pour estimer la pseudo-distance entre le récepteur et ledit transmetteur à partir de ladite position évaluée du récepteur et de données d'éphéméride concernant ledit transmetteur, la pseudo-distance ($\hat{P}d_i$) étant estimée de manière à être indépendante de ladite pseudo-distance mesurée ($Pd_i$) en utilisant l'ensemble des pseudo-distances mesurées ($Pd_m$) par le récepteur (R) à l'exception de celle ($Pd_i$) mesurée pour ledit transmetteur ($T_i$) ;
   • des moyens ($F_1$-$F_N$ ;$C_1$-$C_N$) pour calculer, pour chaque transmetteur ($T_i$), l'écart ($Y_i$) entre la pseudo-distance mesurée ($Pd_i$) et la pseudo-distance ($\hat{P}d_i$) estimée de manière à être indépendante de ladite pseudo-distance mesurée, **caractérisé en ce qu'**il comprend en outre
   • des moyens (6) d'observation de la variation statistique de chacun desdits écarts ($Y_1$-$Y_N$) sur un horizon temporel correspondant à la dynamique d'une panne donnée, lesdits moyens d'observation comportant des moyens pour comparer, pour chaque transmetteur ($T_i$), une pente ($p_{i,j}$) estimée caractérisant l'évolution temporelle de l'erreur de pseudo-distance engendrée pour ledit transmetteur ($T_i$) par ladite panne donnée avec l'écart-type ($\sigma_{i,j}$) de l'écart ($Y_i$) dudit transmetteur ($T_i$) autour de la pente ($p_{i,j}$),
   • et des moyens pour déclarer que l'un des transmetteurs est en panne lorsque le résultat de la comparaison est supérieur à un seuil ($S_j$).

**2.** Système selon la revendication 1 précédentes, **caractérisé en ce que** les moyens d'observation sont adaptés pour réaliser des observations sur une pluralité d'horizons temporels ($H_1$-$H_m$), et **en ce que**, à chaque horizon temporel, correspondent une dynamique de panne et une pente associée.

**3.** Système selon l'une des revendications précédentes, **caractérisé en ce qu'**il comporte en outre :

    • une centrale de navigation inertielle (2) générant des données de position (INERT) ;
    • des moyens (4) pour déterminer la position du récepteur (HYB) en utilisant les données générées par la centrale inertielle et l'ensemble des pseudo-distances mesurées (GPS, $Pd_i$) ;

et **en ce que** en cas de détection de défaillance de l'un des transmetteurs, les moyens (4) pour déterminer la position du récepteur n'utilisent pas la mesure de pseudo-distance correspondant au transmetteur identifié comme défaillant.

**4.** Système selon la revendication précédente en combinaison avec la revendication 1, **caractérisé en ce qu'**il comporte en outre des moyens de reconfiguration (5) adaptés pour qu'en cas d'identification de la défaillance d'un transmetteur à un instant T, les moyens (4) pour déterminer la position du récepteur déterminent à nouveau ladite position sans utiliser, dès un instant antérieur audit instant T d'une durée correspondant au moins à l'horizon temporel ($H_j$) associé à la dynamique de la panne du transmetteur ($T_i$), la pseudo-distance mesurée ($Pd_i$) correspondant au transmetteur défaillant ($T_i$).

**5.** Système selon la revendication précédente, **caractérisé en ce que** les moyens de reconfiguration comportent des moyens de mémorisation (5) des données (INERT) de la centrale inertielle et des pseudo-distances mesurées.

**6.** Procédé de contrôle d'un système de navigation comprenant un récepteur (R) apte à recevoir des signaux en provenance d'une pluralité de transmetteurs ($T_1$-$T_N$), et à mesurer, pour chaque transmetteur ($T_i$), une pseudo-distance ($Pd_i$) entre le récepteur (R) et ledit transmetteur ($T_i$), ledit procédé comportant :

    • une évaluation de la position du récepteur (R) en utilisant l'ensemble des pseudo-distances mesurées ($Pd_m$) à l'exception de celle ($Pd_i$) mesurée pour ledit transmetteur ($T_i$) ;
    • une estimation ($\hat{P}d_i$) de la pseudo-distance entre le récepteur et ledit transmetteur à partir de ladite position évaluée et de données d'éphéméride concernant ledit transmetteur, la pseudo-distance ($\hat{P}d_i$) étant estimée de manière à être indépendante de ladite pseudo-distance mesurée ($Pd_i$) en utilisant l'ensemble des pseudo-distances mesurées ($Pd_m$) par le récepteur (R) à l'exception de celle ($Pd_i$) mesurée pour ledit transmetteur ($T_i$) ;

le procédé mettant en oeuvre le calcul, pour chaque transmetteur ($T_i$), de l'écart ($Y_i$) entre la pseudo-distance mesurée ($\hat{P}d_i$) et la pseudo distance ($Pd_i$) estimée de manière à être indépendante de ladite pseudo-distance mesurée ($\hat{P}d_i$),
le procédé étant **caractérisé en ce qu'**il comporte

    • une étape d'observation de la variation statistique de chacun desdits écarts ($Y_1$-$Y_N$) sur un horizon temporel correspondant à une dynamique d'une panne donnée , ladite étape d'observation mettant en oeuvre une comparaison, pour chaque transmetteur ($T_i$), d'une pente ($p_{i,j}$) estimée caractérisant l'évolution temporelle de l'erreur de pseudo-distance engendrée pour ledit transmetteur ($T_i$) par ladite panne donnée avec l'écart-type ($\sigma_{i,j}$) de l'écart ($Y_i$) dudit transmetteur ($T_i$) autour de la pente ($p_{i,j}$) ;
    • une étape d'identification d'un transmetteur défaillant consistant à déclarer que l'un des transmetteurs est en panne lorsque le résultat de l'opération de comparaison est supérieur à un seuil ($S_j$).

**7.** Procédé selon la revendication 6, **caractérisé en ce que** l'étape d'observation est réalisée des observations sur une pluralité d'horizons temporels ($H_1$-$H_m$), et **en ce que** à chaque horizon temporel correspondent une dynamique de panne et une pente associée.

**8.** Procédé selon l'une des revendications 6 ou 7, **caractérisé en ce qu'**il met également en oeuvre une étape de détermination de la position du récepteur en utilisant des données inertielles (INERT) générées par une centrale de navigation inertielle et l'ensemble des pseudo-distances mesurées (GPS, $Pd_i$), et en ce la détermination de la position du récepteur est réalisée, en cas de détection de défaillance de l'un des transmetteurs, sans utiliser la mesure de pseudo-distance correspondant au transmetteur identifié comme défaillant.

**9.** Procédé selon la revendication précédente en combinaison avec la revendication 6, **caractérisé en ce que**, en cas d'identification de la défaillance d'un transmetteur à un instant T, il comporte en outre une étape de reconfiguration visant à réaliser à nouveau la détermination de la position du récepteur sans utiliser, dès un instant antérieur audit instant T d'une durée correspondant au moins à l'horizon temporel associé à la dynamique de la panne du transmetteur, la pseudo-distance mesurée correspondant au transmetteur défaillant.

**Patentansprüche**

1. Navigationssystem, umfassend:

    - einen Empfänger (R) zum Empfangen von Signalen, die von einer Vielzahl von Sendern ($T_1$-$T_N$) stammen, und zum Messen, für jeden Sender ($T_i$), einer Pseudo-Distanz ($Pd_i$) zwischen dem Empfänger (R) und dem Sender ($T_i$);
    - Mittel zum Auswerten der Position des Empfängers, indem die Gesamtheit der gemessenen Pseudo-Distanzen ($Pd_m$) verwendet wird mit Ausnahme derjenigen ($Pd_i$), die für den Sender ($T_i$) gemessen wurde;
    - Mittel zum Schätzen der Pseudo-Distanz zwischen dem Empfänger und dem Sender ausgehend von der ausgewerteten Position des Empfängers und von den Sender betreffenden Ephemeridendaten, wobei die Pseudo-Distanz ($\hat{Pd_i}$) derart geschätzt wird, dass sie von der gemessenen Pseudo-Distanz ($Pd_i$) unabhängig ist, indem die Gesamtheit der durch den Empfänger (R) gemessenen Pseudo-Distanzen ($Pd_m$) verwendet wird mit Ausnahme derjenigen ($Pd_i$), die für den Sender ($T_i$) gemessen wurde;
    - Mittel ($F_1$-$F_N$ ; $C_1$-$C_N$) zum Berechnen, für jeden Sender ($T_i$), der Abweichung ($Y_i$) zwischen der gemessenen Pseudo-Distanz ($Pd_i$) und der derart geschätzten Pseudo-Distanz ($\hat{Pd_i}$), dass sie von der gemessenen Pseudo-Distanz unabhängig ist,

    **dadurch gekennzeichnet, dass** es ferner Folgendes umfasst:

    - Mittel (6) zum Beobachten der statistischen Veränderung jeder der Abweichungen ($Y_1$-$Y_N$) über einen Zeithorizont, welcher der Dynamik eines bestimmten Ausfalls entspricht, wobei die Beobachtungsmittel Mittel aufweisen, um, für jeden Sender ($T_i$), eine geschätzte Steigung ($p_{i,j}$), welche die zeitliche Entwicklung des Pseudo-Distanzfehlers charakterisiert, der für den Sender ($T_i$) durch den bestimmten Ausfall hervorgerufen wurde, mit der Typenabweichung ($\sigma_{i,j}$) der Abweichung ($Y_i$) des Senders ($T_i$) um die Steigung ($p_{i,j}$) herum zu vergleichen,
    - und Mittel zum Erklären, dass einer der Sender ausgefallen ist, wenn das Ergebnis des Vergleichs größer als ein Schwellwert ($S_j$) ist.

2. System nach dem vorhergehenden Anspruch 1, **dadurch gekennzeichnet, dass** die Beobachtungsmittel dazu geeignet sind, Beobachtungen über eine Vielzahl von Zeithorizonten ($H_1$-$H_m$) zu realisieren, und dass jedem Zeithorizont eine Ausfalldynamik und eine zugeordnete Steigung entsprechen.

3. System nach einem der vorhergehenden Ansprüche, **dadurch gekennzeichnet, dass** es ferner Folgendes umfasst:

    - eine inertiale Navigationszentrale (2), die Positionsdaten (INERT) erzeugt;
    - Mittel (4) zum Bestimmen der Position des Empfängers (HYB), indem die durch die inertiale Zentrale erzeugten Daten und die Gesamtheit der gemessenen Pseudo-Distanzen (GPS, $Pd_i$) verwendet werden;

    und dass im Fall der Feststellung des Ausfalls einer der Sender die Mittel (4) zum Bestimmen der Position des Empfängers nicht die Messung der Pseudo-Distanz verwenden, die dem als ausgefallen identifizierten Sender entspricht.

4. System nach dem vorangehenden Anspruch, in Kombination mit Anspruch 1, **dadurch gekennzeichnet, dass** es ferner Rekonfigurationsmittel (5) umfasst, die geeignet sind, damit im Fall einer Identifizierung des Ausfalls eines Senders zu einem Zeitpunkt T die Mittel (4) zum Bestimmen der Position des Empfängers erneut die Position bestimmen, ohne, ab einem Zeitpunkt, der vor dem Zeitpunkt T liegt, über einen Zeitraum, der mindestens dem Zeithorizont ($H_i$) entspricht, welcher der Ausfalldynamik des Senders ($T_i$) zugeordnet ist, die gemessene Pseudo-Distanz ($Pd_i$), die dem ausgefallenen Sender ($T_i$) entspricht, zu verwenden.

5. System nach dem vorhergehenden Anspruch, **dadurch gekennzeichnet, dass** die Rekonfigurationsmittel Mittel zum Speichern (5) der Daten (INERT) der inertialen Zentrale und der gemessenen Pseudo-Distanzen umfassen.

6. Verfahren zum Steuern eines Navigationssystems, das einen Empfänger (R) zum Empfangen von Signalen, die von einer Vielzahl von Sendern ($T_1$-$T_N$) stammen, und zum Messen, für jeden Sender ($T_i$), einer Pseudo-Distanz ($Pd_i$) zwischen dem Empfänger und dem Sender ($T_i$) umfasst, wobei das Verfahren Folgendes umfasst:

    - eine Auswertung der Position des Empfängers (R), indem die Gesamtheit der gemessenen Pseudo-Distanzen ($Pd_m$) verwendet wird mit Ausnahme derjenigen ($Pd_i$), die für den Sender ($T_i$) gemessen wurde;

- eine Schätzung ($\hat{P}d_i$) der Pseudo-Distanz zwischen dem Empfänger und dem Sender ausgehend von der ausgewerteten Position und von den Sender betreffenden Ephemeridendaten, wobei die Pseudo-Distanz ($\hat{P}d_i$) derart geschätzt wird, dass sie von der gemessenen Pseudo-Distanz ($Pd_i$) unabhängig ist, indem die Gesamtheit der durch den Empfänger (R) gemessenen Pseudo-Distanzen ($Pd_m$) verwendet wird mit Ausnahme derjenigen ($Pd_i$), die für den Sender ($T_i$) gemessen wurde;

wobei das Verfahren die Berechnung, für jeden Sender ($T_i$), der Abweichung ($Y_i$) zwischen der gemessenen Pseudo-Distanz ($Pd_i$) und der geschätzten Pseudo-Distanz ($\hat{P}d_i$) derart durchführt, dass sie von der gemessenen Pseudo-Distanz ($Pd_i$) unabhängig ist,

wobei das Verfahren **dadurch gekennzeichnet ist, dass** es Folgendes umfasst:

- einen Schritt der Beobachtung der statistischen Veränderung jeder der Abweichungen ($Y_1$-$Y_N$) über einen Zeithorizont, der einer Dynamik eines bestimmten Ausfalls entspricht, wobei der Schritt der Beobachtung einen Vergleich ausführt, für jeden Sender ($T_i$), einer geschätzten Steigung ($p_{i,j}$), welche die zeitliche Entwicklung des Pseudo-Distanzfehlers charakterisiert, der für den Sender ($T_i$) durch den bestimmten Ausfall hervorgerufen wurde, mit der Typenabweichung ($\sigma_{i,j}$) der Abweichung ($Y_i$) des Senders ($T_i$) um die Steigung ($p_{i,j}$) herum;
- einen Schritt der Identifizierung eines ausgefallenen Senders, der darin besteht, zu erklären, dass einer der Sender ausgefallen ist, wenn das Ergebnis des Vergleichs größer als ein Schwellwert ($S_i$) ist.

7. Verfahren nach Anspruch 6, **dadurch gekennzeichnet, dass** der Beobachtungsschritt aus Beobachtungen über eine Vielzahl von Zeithorizonten ($H_1$-$H_m$) besteht; und dass jedem Zeithorizont eine Ausfalldynamik und eine zugeordnete Steigung entsprechen.

8. Verfahren nach einem der Ansprüche 6 oder 7, **dadurch gekennzeichnet, dass** es auch einen Schritt der Bestimmung der Position des Empfängers durchführt, indem durch die inertiale Navigationszentrale erzeugte inertiale Daten (INERT) und die Gesamtheit der gemessenen Pseudo-Distanzen (GPS, $Pd_i$) verwendet werden; und dass die Bestimmung der Position des Empfängers durchgeführt wird, im Fall der Feststellung des Ausfalls einer der Sender, ohne die Messung der Pseudo-Distanz, die dem als ausgefallen identifizierten Sender entspricht, zu verwenden.

9. Verfahren nach dem vorhergehenden Anspruch, in Kombination mit Anspruch 6, **dadurch gekennzeichnet, dass** es, im Fall der Identifizierung des Ausfalls eines Senders zu einem Zeitpunkt T, ferner einen Rekonfigurationsschritt umfasst, der dazu dient, erneut die Bestimmung der Position des Empfängers zu realisieren, ohne, ab einem Zeitpunkt, der vor dem Zeitpunkt T liegt, über einen Zeitraum, der mindestens dem Zeithorizont entspricht, welcher der Ausfalldynamik des Senders zugeordnet ist, die gemessene Pseudo-Distanz, die dem ausgefallenen Sender entspricht, zu verwenden.

**Claims**

1. Navigation system comprising:

- a receiver (R) able to receive signals coming from a plurality of transmitters ($T_1$-$T_N$) and to measure, for each transmitter ($T_i$), a pseudo-distance ($Pd_i$) between the receiver (R) and said transmitter ($T_i$),
- means for evaluating the position of the receiver using all the pseudo-distances measured ($Pd_m$) with the exception of the one ($Pd_i$) measured for said transmitter ($T_i$);
- means for estimating the pseudo-distance between the receiver and said transmitter from said evaluated position of the receiver and ephemeris data concerning said transmitter, the pseudo-distance ($\hat{P}d_i$) being estimated so as to be independent of said measured pseudo-distance ($Pd_i$) by using all the pseudo-distances measured ($Pd_m$) by the receiver (R) with the exception of the one ($Pd_i$) measured for said transmitter ($T_i$);
- means ($F_1$-$F_N$; $C_1$-$C_N$) for calculating, for each transmitter ($T_i$), the difference ($Y_i$) between the measured pseudo-distance ($Pd_i$) and the estimated pseudo-distance ($Pd_i$) so as to be independent of said measured pseudo-distance,

**characterised in that** it also comprises

- means (6) for observing the statistical variation of each of said differences ($Y_1$-$Y_N$) over a time horizon corresponding to the dynamic of a given failure, said observation means comprising means for comparing, for each transmitter ($T_i$), an estimated slope ($p_{i,j}$) characterising the change over time of the pseudo-distance error caused for said transmitter ($T_i$) by said given failure with the standard deviation ($\sigma_{i,j}$) of the difference ($Y_i$) of said transmitter ($T_i$) around the slope ($p_{i,j}$),
- and means for declaring that one of the transmitters is faulty when the result of the comparison is greater than a threshold ($S_j$).

2. System according to the preceding claim 1, **characterised in that** the observation means are adapted to perform observations on a plurality of time horizons ($H_1$-$H_m$), and **in that** a failure dynamic and associated slope correspond to each time horizon.

3. System according to one of the preceding claims, **characterised in that** it also comprises:

   - an inertial navigation unit (2) generating position data (INERT);
   - means (4) for determining the position of the receiver (HYB) using the data generated by the inertial unit and all the measured pseudo-distances (GPS, $Pd_i$);

   and **in that**, in the event of the detection of a fault on one of the transmitters, the means (4) for determining the position of the receiver do not use the pseudo-distance measurement corresponding to the transmitter identified as faulty.

4. System according to the preceding claim in combination with claim 1, **characterised in that** it also comprises configuration means (5) adapted so that, in the event of identification of the failure of a transmitter at an instant T, the means (4) for determining the position of the receiver once again determine said position without using, as from an instant prior to said instant T with a duration corresponding to at least the time horizon ($H_i$) associated with the dynamic of the failure of the transmitter ($T_i$), the measured pseudo-distance ($Pd_i$) corresponding to the faulty transmitter ($T_i$).

5. System according to the preceding claim, **characterised in that** the reconfiguration means comprise means (5) for storing the data (INERT) of the inertial unit and the measured pseudo-distances.

6. Method for controlling a navigation system comprising a receiver (R) able to receive signals coming from a plurality of transmitters ($T_1$-$T_N$) and to measure, for each transmitter ($T_i$), a pseudo-distance ($Pd_i$) between the receiver (R) and said transmitter ($T_i$), said method comprising:

   - an evaluation of the position of the receiver (R) using all the pseudo-distances measured ($Pd_m$) with the exception of the one ($Pd_i$) measured for said transmitter ($T_i$);
   - an estimation ($\hat{P}d_i$) of the pseudo-distance between the receiver and said transmitter from said evaluated position and ephemeris data concerning said transmitter, the pseudo-distance ($\hat{P}d_i$) being estimated so as to be independent of said measured pseudo-distance ($Pd_i$) using all the pseudo-distances ($Pd_m$) measured by the receiver (R) with the exception of the one ($Pd_i$) measured for said transmitter ($T_i$);

   the method using the calculation, for each transmitter ($T_i$), of the difference ($Y_i$) between the measured pseudo-distance ($\hat{P}d_i$) and the pseudo-distance ($Pd_i$) estimated so as to be independent of said measured pseudo-distance ($\hat{P}d_i$),
   the method being **characterised in that** it comprises

   - a step of observing the statistical variation of each of said differences ($Y_1$-$Y_N$) over a time horizon corresponding to a dynamic of a given failure, said observation step using a comparison, for each transmitter ($T_i$), of an estimated slope ($p_{i,j}$) characterising the change over time of the pseudo-distance error caused for said transmitter ($T_i$) by said given failure with the standard deviation ($\sigma_{i,j}$) of the difference ($Y_i$) of said transmitter ($T_i$) around the slope ($p_{i,j}$);
   - a step of identifying a faulty transmitter consisting of declaring that one of the transmitters is faulty when the result of the comparison operation is above a threshold ($S_j$).

7. Method according to claim 6, **characterised in that** the observation step is performed from the observations over a plurality of time horizons ($H_1$-$H_m$), and **in that** a failure dynamic and an associated slope correspond to each time horizon.

8. Method according to one of claims 6 or 7, **characterised in that** it also uses a step of determining the position of the receiver using inertial data (INERT) generated by an inertial navigation unit and all the measured pseud-distances (GPS, $Pd_i$), and **in that** the position of the receiver is determined, in the event of the detection of a failure of one of the transmitters, without using the pseudo-distance measurement corresponding to the transmitter identified as faulty.

9. Method according to the preceding claim in combination with claim 6, **characterised in that**, in the event of identification of the failure at an instant T, it also comprises a reconfiguration step aimed at once again determining the position of the receiver without using, as from a time prior to said instant T with a duration corresponding to at least the time horizon associated with the dynamic of the failure of the transmitter, the measured pseudo-distance corresponding to the faulty transmitter.

FIG_1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5583774 A

- US 5600329 A

**Littérature non-brevet citée dans la description**

- A Performance Analysis of a Tightly Coupled GPS/Inertial System for Two Integrity Monitoring Methods. **YOUNG C. LEE ; DANIEL G. O'LAUGHLIN.** ION GPS-99. Institute of Navigation, 14 Septembre 1999
- **R. GROVER BROWN ; PAUL W. MCBURNEY.** Self-Contained GPS Integrity Check Using Maximum Solution Separation. *Navigation,* Mars 1988

- GPS/IRS AIME : Certification for Sole Mans and Solution to RF Interference. **JOHN DIESEL ; GREGORY DUNN.** ION GPS-96. Institute of Navigation, 17 Septembre 1996
- Analysis Of Range And Position Comparison Methods As A Means To Provide GPS Integrity In The User Receiver. *Institute of Navigation Annual Meeting, 42nd meeting*